(19) **Europäisches Patentamt**
**European Patent Office**
**Office européen des brevets**

(11) **EP 3 657 650 A1**

(12) # EUROPEAN PATENT APPLICATION

(43) Date of publication:
**27.05.2020 Bulletin 2020/22**

(51) Int Cl.:
*H02M 1/00* (2006.01)     *G01K 7/01* (2006.01)

(21) Application number: **18207241.3**

(22) Date of filing: **20.11.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
- **Herceg, Marijan**
  **HR-31000 Osijek (HR)**
- **Matic, Tomislav**
  **HR-31000 Osijek (HR)**

(74) Representative: **Swindell & Pearson Limited
48 Friar Gate
Derby DE1 1GY (GB)**

(54) **A TEMPERATURE SENSING DEVICE**

(57) The application relates to temperature sensing apparatus and electronic devices comprising temperature sensing apparatus. The temperature sensing apparatus comprises at least one diode, at least one capacitor configured to be charged through the at least one diode, and a plurality of switches having a first configuration and a second configuration. When the plurality of switches are in the first configuration they enable the at least one capacitor to be charged through the at least one diode and when the plurality of switches are in the second configuration they enable the at least one capacitor to be discharged through the at least one diode. The apparatus also comprises control circuitry configured to enable the plurality of switches to be switched between the first configuration and the second configuration.

FIG. 1

**Description**

TECHNOLOGICAL FIELD

Examples of the present disclosure relate to a temperature sensing device. Some relate to a temperature sensing device which is suitable for use in wearable electronic devices.

BACKGROUND

Temperature is one of the most often measured physical values. It is therefore useful to provide efficient and versatile apparatus for temperature sensing.

BRIEF SUMMARY

According to various, but not necessarily all, examples of the disclosure there may be provided a temperature sensing apparatus comprising: at least one diode; at least one capacitor configured to be charged through the at least one diode; a plurality of switches having a first configuration and a second configuration wherein when the plurality of switches are in the first configuration they enable the at least one capacitor to be charged through the at least one diode and when the plurality of switches are in the second configuration they enable the at least one capacitor to be discharged through the at least one diode; and control circuitry configured to enable the plurality of switches to be switched between the first configuration and the second configuration.

The output of the temperature sensing apparatus may comprise a pulse train.

The time taken to charge the at least one capacitor to an upper threshold level and discharge the at least one capacitor to a lower threshold level may provide an indication of temperature.

The temperature is obtained from an average of one or more charging and discharging cycles of the at least one capacitor.

The temperature sensing apparatus may comprise a plurality of diodes connected in parallel to one another.

The control circuitry may comprise at least one comparator.

The control circuitry may be configured to switch the plurality of switches between the first configuration and the second configuration based on a voltage level of the at least one capacitor.

The control circuitry may be configured to control the plurality of switches to enable a plurality of continuous charging and discharging cycles of the at least one capacitor.

The at least one diode may comprise a p-n junction diode.

According to various, but not necessarily all, examples of the disclosure there may be provided a wearable electronic device comprising at least one temperature sensing apparatus as claimed in any preceding claim.

BRIEF DESCRIPTION

Some example embodiments will now be described with reference to the accompanying drawings in which:

Fig. 1 shows an example temperature sensing apparatus;
Figs. 2A and 2B show example outputs of a temperature sensing apparatus;
Fig. 3 shows another example temperature sensing apparatus; and
Fig. 4 shows an example wearable electronic device.

DETAILED DESCRIPTION

Examples of the disclosure relate to a temperature sensing apparatus 101. The temperature sensing apparatus 101 could be used in devices such as wearable electronic devices 401. The temperature sensing apparatus 101 comprises, at least one diode 103, at least one capacitor 105 configured to be charged through the at least one diode 103 and a plurality of switches 107A, 107B, 107C having a first configuration and a second configuration. When the plurality of switches 107A, 107B, 107C are in the first configuration they enable the at least one capacitor 105 to be charged through the at least one diode 103 and when the plurality of switches 107A, 107B, 107C are in the second configuration they enable the at least one capacitor 105 to be discharged through the at least one diode 103. The at least one diode 103 is the same diode 103 that is used for charging of the capacitor 105. The temperature sensing apparatus 101 also comprises control circuitry 109 configured to enable the plurality of switches 107A, 107B, 107C to be switched between the first configuration and the second configuration. This switching enables the time period for both charging and discharging the at least one capacitor 105 through the at least one diode 103 to be measured. This provides a more accurate measurement of temperature compared to measuring the time taken for just charging the at least one capacitor 105.

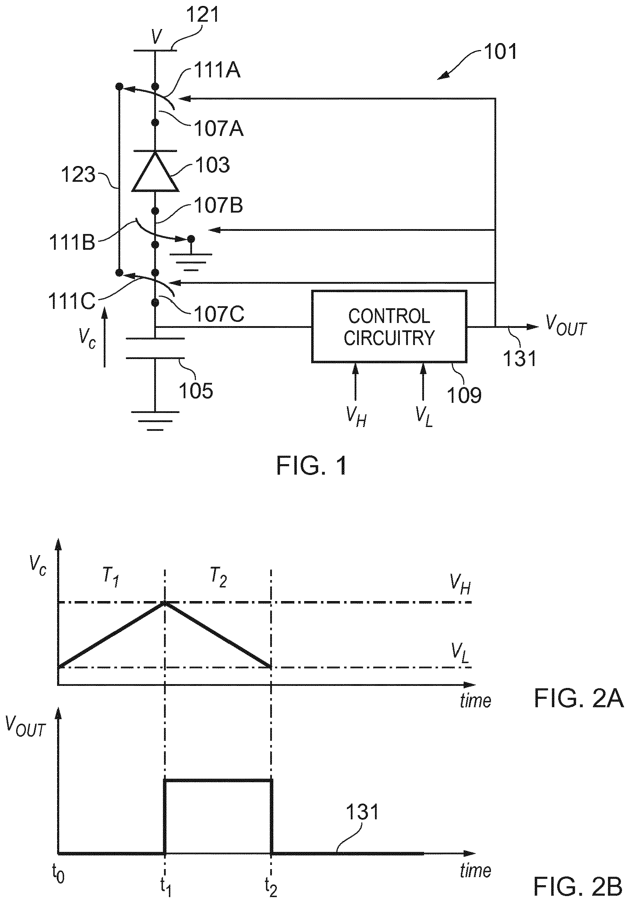

Fig. 1 shows an example temperature sensing apparatus 101. The temperature sensing apparatus 101 shown in Fig. 1 comprises a diode 103, a capacitor 105, a plurality of switches 107A, 107B, 107C and control circuitry 109. It is to be appreciated that in other examples the temperature sensing apparatus 101 could comprise other components that are not shown in Fig. 1. For instance the temperature sensing apparatus 101 could comprise a power source or means for coupling the temperature sensing apparatus 101 to a power source.

The diode 103 is sensitive to temperature. The diode 103 may be sensitive to temperature in that the saturation current of the diode 103 is determined by the ambient temperature of the diode 103. In examples of the disclosure the diode 103 could be a reverse polarized diode. The saturation current of the diode 103 could increase as the temperature of the diode 103 increases.

In some examples the diode 103 may be a p-n junction diode. Other types of diode could be used in other examples of the disclosure.

In the example shown in Fig. 1 the temperature sensing apparatus 101 comprises one diode 103. It is to be appreciated that in other examples the temperature sensing apparatus 101 could comprise more than one diode 103. Where the temperature sensing apparatus 101 comprises a plurality of diodes 103 the plurality of diodes 103 could be connected in parallel to one another. This may increase the current compared to having a single a diode 103

The capacitor 105 is coupled to the diode 103 so that the capacitor 105 can be charged through the diode 103. The capacitor 105 is configured to be charged so that the voltage across the capacitor 105 is $V_c$.

The temperature sensing apparatus 101 also comprises a plurality of switches 107A, 107B, 107C. In the examples shown in Fig. 1 the temperature sensing apparatus 101 comprises three switches 107A, 107B, 107C. It is to be appreciated that in other examples the temperature sensing apparatus 101 could comprise a different number of switches.

The plurality of switches 107A, 107B, 107C have at least a first configuration and a second configuration. The plurality of switches 107A, 107B, 107C are shown in the first configuration in Fig. 1. In the first configuration the plurality of switches 107A, 107B, 107C enable the capacitor 105 to be charged through the diode 103. In the second configuration the plurality of switches 107A, 107B, 107C enable the capacitor 105 to be discharged through the diode 103.

In the example temperature sensing apparatus 101 shown in Fig. 1 a first switch 107A is provided between the diode 103 and a power source 121. In the first configuration this first switch 107A is closed so as to provide a path for direct current between the power source 121 and the diode 103. In the example temperature sensing apparatus 101 shown in Fig. 1 the second switch 107B and also the third switch 107C are provided between the diode 103 and the capacitor 105. In the first configuration both the second switch 107B and the third switch 107C are closed so as to provide a path for direct current between the diode 103 and the capacitor 105.

The arrows 111A, 111B, 111C show how the plurality of switches 107A, 107B, 107C are re-configured so as to arrange the plurality of switches 107A, 107B, 107C into the second configuration. In the second configuration the first switch 107A is opened so as to break the path for direct current between the power source 121 and the diode 103. The third switch 107C is also opened to break the path for direct current between the diode 103 and the capacitor 105. The first switch 107A and the third switch 107C are opened so as to provide a connection to a conductive trace 123. This conductive trace 123 enables a conductive path to be provided from the charged capacitor 105 to the diode 103 so as to enable the capacitor 105 to be discharged through the diode 103. In the second configuration the second switch 107B is also opened to provide a connection to ground.

The plurality of switches 107A, 107B, 107C are coupled to control circuitry 109. The plurality of switches 107A, 107B, 107C are coupled to the control circuitry 109 so that the control circuitry 109 can provide control signals to the plurality of switches 107A, 107B, 107C to enable the plurality of switches 107A, 107B, 107C to be switched between the first configuration and the second configuration. The control circuitry 109 may be configured to control the switching between the first configuration and the second configuration based on a voltage level of the capacitor 105. In some examples the control circuitry 109 may be configured to switch the plurality of switches 107A, 107B, 107C from the first configuration to the second configuration when the voltage level of the capacitor 105 reaches a first threshold level $V_H$. This first threshold voltage level could be a maximum voltage level, or substantially the maximum voltage level for the capacitor 105. The control circuitry 109 could also be configured to switch the plurality of switches 107A, 107B, 107C from the second configuration back to the first configuration when the voltage level of the capacitor 105 reaches a second threshold level $V_L$. This second threshold voltage level could be a minimum voltage level, or substantially the minimum voltage level for the capacitor 105. The first threshold level is an upper threshold level and the second threshold level is a lower threshold level.

The control circuitry 109 may comprise any means which may be configured to provide a control signal to the plurality of switches 107A, 107B, 107C in response to a threshold voltage being reached on the capacitor 105. In some examples the control circuitry 109 may comprise a comparator such as a hysteresis comparator or any other suitable means.

The control circuitry 109 may be configured to provide an output signal 131. The output signal 131 has a voltage

level $V_{out}$. The output signal 131 provides an indication of the time taken to charge the capacitor 105 through the diode 103 and the time taken to discharge the capacitor 105 through the diode 103. An example of an output signal 131 from the control circuitry 109 is shown in Fig. 2B.

The control circuitry 109 may be configured so that the output signal 131 from the control circuitry 109 can be provided to processing circuitry to enable the ambient temperature of the diode 103 to be estimated from the information in the output signal 131. In some examples the processing circuitry may be provided within the temperature sensing apparatus 101 so that the output signal 131 can be provided directly from the control circuitry 109 to the processing circuitry. In other examples the processing circuitry could be provided in a separate apparatus. In such cases the output signal 131 may be provided to transceiver circuitry to enable the output signal 131 to be transmitted to the processing circuitry.

Figs. 2A and 2B show example outputs of the temperature sensing apparatus 101. Fig 2A shows the voltage level Vc across the capacitor 105 as a function of time.

At time $t_0$ the voltage level $V_C$ across the capacitor 105 is at the lower threshold level $V_L$. At time $t_0$ the plurality of switches 107A, 107B, 107C are arranged into the first configuration so that charging of the capacitor 105 through the diode 103 can begin.

From time $t_0$ to time $t_1$ the capacitor 105 is charged through the diode 103. The voltage level across the capacitor 105 increases from $V_L$ to $V_H$. At time $t_1$ the control circuitry 109 determines that the first threshold voltage level $V_H$ has been reached and sends a control signal to the plurality of switches 107A, 107B, 107C to cause them to be arranged into the second configuration so that discharging of the capacitor 105 through the diode 103 can begin.

From time $t_1$ to time $t_2$ the capacitor 105 is discharged through the diode 103. The voltage level across the capacitor 105 decreases from $V_H$ back to $V_L$. At time $t_2$ the control circuitry 109 determines that the second threshold voltage level $V_L$ has been reached and sends a control signal to the plurality of switches 107A, 107B, 107C to cause them to be arranged back into the first configuration so that charging of the capacitor 105 through the diode 103 can begin again. It is to be appreciated that this cycle can be repeated any number of times. The cycle of charging and discharging may be repeated continuously so that there is no time gap between consecutive cycles.

The time taken to charge the capacitor 105 is given by $t_1 - t_0 = T_1$ and the time taken to discharge the capacitor 105 is given by $t_2 - t_1 = T_2$. As the time taken to charge and discharge the capacitor 105 is dependent upon the saturation current of the diode 103 and the saturation current is determined by the ambient temperature of the diode 103 the values of $T_1$ and $T_2$ give an indication of the ambient temperature of the diode 103.

The relation between time measurement TI where I =1, 2 and saturation current $I_{DI}$ is given by

$$ V_H - V_L = \frac{I_{Dl}}{C} T_l \rightarrow I_{Dl} = \frac{C}{T_{1l}} (V_H - V_L) , \qquad (1) $$

Where $V_H$ is the upper voltage level on the capacitor, $V_L$ is the lower voltage level on the capacitor and C is the capacitance of the capacitor.

The relation between saturation current and measured temperature is given as

$$ I_{Dl} = Const * \exp\left(\frac{-E_g}{x*k*Temp_l}\right) \rightarrow Temp_l = \frac{E_g}{x*k*ln\left(\frac{Const}{I_{Dl}}\right)}, \qquad (2) $$

where Const represents a constant value, $E_g$ is the energy gap between the valence and conduction bands, k is the Boltzmann constant, and x is the parameter which value is between 1 and 2 and depends on diode production process.

Therefore, by substituting (1) in (2) the temperature from measurement time can be obtained as

$$ Temp_l = \frac{E_g}{x*k*ln\left(\frac{Const*T_l}{C(V_H-V_L)}\right)}. \qquad (3) $$

Fig. 2B shows an example output signal 131 from the control circuitry 109. The output signal 131 comprises a pulse train where the pulses provide an indication of the duration of the charging and discharging of the capacitor 105.

At time $t_0$ the voltage level $V_{out}$ of the output signal 131 is at a first level. The first level may be zero or a minimum level. At time $t_1$ the control circuitry determines that the first threshold voltage level $V_H$ has been reached for the capacitor 105 and the voltage level $V_{out}$ of the output signal 131 switches from the first level to a second different level. The second level may be higher than the first level. At time $t_2$ the control circuitry 109 determines that the second threshold voltage level $V_L$ has been reached for the capacitor 105 and the voltage level $V_{out}$ of the output signal 131 switches from the second level back to the first level. It is to be appreciated that this cycle can be repeated any number of times. Repeating the cycle may enable a more accurate temperature measurement to be obtained.

The output signal 131 therefore provides an indication of the time taken to charge the capacitor 105 though the diode 103 and also the time taken to discharge the capacitor 105 through the diode 103.

The temperature sensing apparatus 101 therefore enables the duration of both the charging of the capacitor 105 through the diode 103 and the discharging of the capacitor 105 through the diode to be measured. This provides a more accurate measurement compared to just measuring the time taken to charge the capacitor as it reduces the amount of noise in the measurement. It is to be appreciated that theoretically the timescales should be the same for both the charging and discharging however the noise introduced by the components within the circuit cause a deviation from this ideal circumstance. Furthermore as the same measurement can be repeated multiple times the measurements can be averaged over these plurality of cycles and this further reduces the noise in the measurements to provide a more accurate measurement.

The measurement times $T_1$ and $T_2$ are influenced by noise $\Delta T_1$ and $\Delta T_2$ within the apparatus 101. The noise could be cause by imperfections within the circuit elements such as threshold voltage level offsets, saturation current variations or any other suitable imperfections. The measured times during each of two cycles of measurement can be expressed as $T_1 = T_{meas} + \Delta T_1$ and $T_2 = T_{meas} + \Delta T_2$, respectively, where $T_{meas}$ is ideal measurement time, which represents the measured temperature. The measured temperature could be the ambient temperature, the body temperature of a subject or any other suitable temperature.

The noises $\Delta T_{1,2}$ can be modeled as white Gaussian noise with zero mean value and variance $N_0$. Therefore, the average measurement time will be

$$T_{avg} = \frac{T_1 + T_2}{2} = \frac{T_{meas} + \Delta T_1 + T_{meas} + \Delta T_2}{2} = T_{meas} + \frac{\Delta T_1}{2} + \frac{\Delta T_2}{2}. \tag{4}$$

Furthermore, the mean value of $T_{avg}$ can be given as

$$E\left[T_{avg}\right] = E\left[\frac{T_{meas} + \Delta T_1 + T_{meas} + \Delta T_2}{2}\right] = \frac{T_{meas}}{2} + \frac{T_{meas}}{2} + E\left[\frac{\Delta T_1}{2}\right] + E\left[\frac{\Delta T_1}{2}\right] = T_{meas}, \tag{5}$$

where the last equality arises from the fact that the mean value of $\Delta T_{1,2}$ is equal to zero, while E[*] represents mean value operator.

Subsequently, due to the fact that all variables in eq. (4) are statistically independent the variance of $T_{avg}$ is given as

$$var\left[T_{avg}\right] = var\left[\frac{T_{meas} + \Delta T_1 + T_{meas} + \Delta T_2}{2}\right] = E\left[\left(\frac{\Delta T_1}{2}\right)^2\right] + E\left[\left(\frac{\Delta T_2}{2}\right)^2\right] = \frac{N_0}{4} + \frac{N_0}{4} = \frac{N_0}{2}, \tag{6}$$

where var[*] is variance operator.

As shown in equation (6) by averaging the time measurement over two measurement cycles the measurement time variance $var[T_{avg}]$ and hence, temperature variance is double reduced. Subsequently, by increasing the number of measurement cycles the measurement time variance can be additionally reduced.

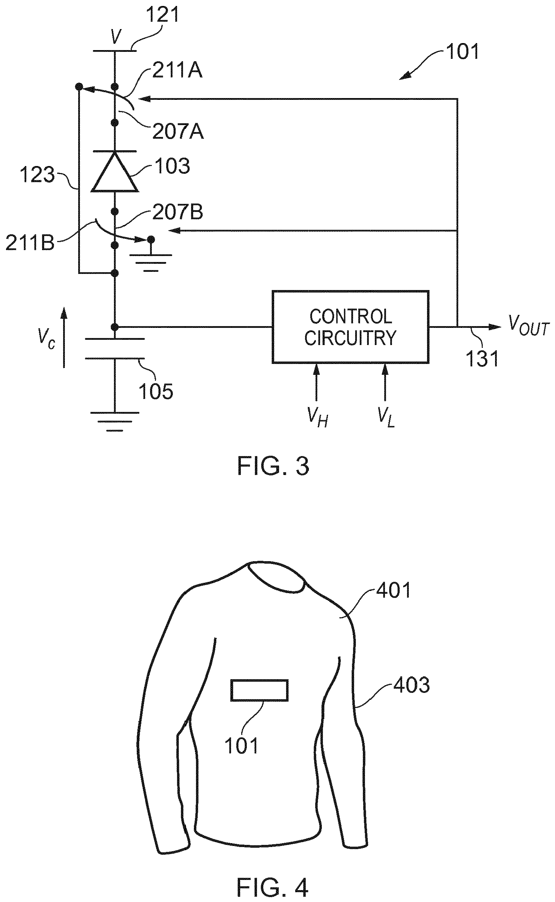

Fig. 3 shows another example temperature sensing apparatus 101. The temperature sensing apparatus 101 comprises a diode 103, a capacitor 105 and control circuitry 109 which may be as shown in Fig. 1. The temperature sensing apparatus 101 differs from that shown in Fig. 1 in that the temperature sensing apparatus 101 only comprises two switches 207A, 207B.

The two switches 207A, 207B in the example of Fig. 3 have at least a first configuration and a second configuration. The two switches 207A, 207B are shown in the first configuration in Fig. 3. In the first configuration the two switches 207A, 207B enable the capacitor 105 to be charged through the diode 103. In the second configuration the two switches 207A, 207B enable the capacitor 105 to be discharged through the diode 103.

In the example temperature sensing apparatus 101 shown in Fig. 3 the first switch 207A is provided between the diode 103 and a power source 121. In the first configuration this first switch 207A is closed so as to provide a path for direct current between the power source 121 and the diode 103. In the example temperature sensing apparatus 101 shown in Fig. 3 the second switch 207B is provided between the diode 103 and the capacitor 105. In the first configuration the second switch 207B is closed so as to provide a path for direct current between the diode 103 and the capacitor 105.

The arrows 211A and 211B show how the two switches 207A, 207B are re-configured so as to arrange the two switches 207A, 207B into the second configuration. In the second configuration the first switch 207A is open so as to break the path for direct current between the power source 121 and the diode 103. The second switch 207b is also opened to break the path for direct current between the diode 103 and the capacitor 105. The first switch 207A is opened so as to provide a connection to a conductive trace 123. This conductive trace 123 enables a conductive path to be provided from the charged capacitor 105 to the diode 103 so as to enable the capacitor 105 to be discharged through the diode 103. The second switch 207B is opened so as to provide a connection to ground.

It is to be appreciated that other variations of the plurality of switches could be used in other examples of the disclosure.

In some examples of the disclosure one or more of the temperature sensing apparatus 101 could be used for measuring the body temperature of a subject. In such examples the temperature sensing apparatus 101 could be provided within a wearable electronic device 401.

Fig. 4 shows a wearable electronic device 401 comprising one or more temperature sensing apparatus 101. The wearable electronic device 401 comprises any means which may be attached to the body of a subject so as to enable the one or more temperature sensing apparatus 101 to measure the temperature of the subject.

In the example of Fig. 4 the wearable electronic device 401 comprises a garment 403. The garment 403 comprises an item of clothing which is arranged to be worn by a subject. In the example of Fig. 4 the garment 403 comprises a shirt which could be worn by a person. The temperature sensing apparatus 101 may be positioned within the garment 403 so that when a subject is wearing the garment the one or more diodes 101 of the temperature sensing apparatus 101 are positioned adjacent to, or in close proximity to, the body of the subject. This positioning may enable the temperature of the subject to be monitored.

The wearable electronic device 401 could comprise a plurality of temperature sensing apparatus 101 which could be positioned in different locations within the wearable electronic device 401. The different positions of the different temperature sensing apparatus 101 could enable the subject's temperature to be monitored at different parts of their body.

Other types of wearable electronic devices 401 could be used in other examples of the disclosure. For instance the wearable electronic device 401 could comprise a strap which could be attached to any suitable part of a subject's body, or any other suitable article of clothing. In some examples the wearable electronic device 401 could comprise an adhesive portion which could be adhered to the skin of a subject.

The wearable electronic device 401 may be configured to be worn for an extended period of time. For instance, the garment 403 or other type of device may be light weight and comfortable enough so that a subject can wear the wearable electronic device 401 for the extended period of time. The extended period of time could be several hours or even longer. The plurality of temperature sensing apparatus 101 may be configured to enable the temperature of the subject to be monitored for that extended period of time. This may be useful for the purposes of health monitoring. This may enable changes in the temperature of the subject to be monitored.

In examples where the temperature sensing apparatus 101 is being used to measure the body temperature of a subject the temperature could be measured over a plurality of cycles of charging and discharging of the capacitor 105 so as to increase the accuracy of the measurement. In such examples the temperature that is being measured is relatively stable and large or sudden fluctuations in the temperature would not be expected. In such examples the charge-discharge cycle time could be relatively long. For example, it could be of the order of seconds or tenths of seconds. In other examples the temperature sensing apparatus 101 could be used to measure temperature in an environment where the temperature is varying more rapidly. For instance the temperature sensing apparatus 101 could be used to measure the environmental conditions during a chemical manufacturing process or other similar environments. In such examples the temperature sensing apparatus 101 could be configured to have a shorter charge-discharge cycle time by having a smaller capacitor 105 with a smaller time constant and/or by increasing the amount of current through the diode 103 by having more diodes 103 in parallel or by any other suitable means.

In this description the term coupled means operationally coupled and any number or combination of intervening elements can exist between coupled elements, including no intervening elements.

The above described examples find application as enabling components of:

automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems;

user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting'.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a subclass of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. A temperature sensing apparatus comprising:

   at least one diode;
   at least one capacitor configured to be charged through the at least one diode;
   a plurality of switches having a first configuration and a second configuration wherein when the plurality of switches are in the first configuration they enable the at least one capacitor to be charged through the at least one diode and when the plurality of switches are in the second configuration they enable the at least one capacitor to be discharged through the at least one diode; and
   control circuitry configured to enable the plurality of switches to be switched between the first configuration and the second configuration.

2. A temperature sensing apparatus as claimed in claim 1 wherein the output of the temperature sensing apparatus comprises a pulse train.

3. A temperature sensing apparatus as claimed in any preceding claim wherein the time taken to charge the at least one capacitor to an upper threshold level and discharge the at least one capacitor to a lower threshold level provides an indication of temperature.

4. A temperature sensing apparatus as claimed in any preceding claim wherein the temperature is obtained from an average of one or more charging and discharging cycles of the at least one capacitor.

5. A temperature sensing apparatus as claimed in any preceding claim comprising a plurality of diodes connected in parallel to one another.

6. A temperature sensing apparatus as claimed in any preceding claim wherein the control circuitry comprises at least one comparator.

7. A temperature sensing apparatus as claimed in any preceding claim wherein the control circuitry is configured to switch the plurality of switches between the first configuration and the second configuration based on a voltage level of the at least one capacitor.

8. A temperature sensing apparatus as claimed in any preceding claim wherein the control circuitry is configured to control the plurality of switches to enable a plurality of continuous charging and discharging cycles of the at least one capacitor.

9. A temperature sensing apparatus as claimed in any preceding claim wherein the at least one diode comprises a p-n junction diode.

10. A wearable electronic device comprising at least one temperature sensing apparatus as claimed in any preceding claim.

FIG. 1

FIG. 2A

FIG. 2B

FIG. 3

FIG. 4

Europäisches
Patentamt

European
Patent Office

Office européen
des brevets

# EUROPEAN SEARCH REPORT

Application Number

EP 18 20 7241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/117494 A1 (CALDARA MICHELE [IT]) 30 April 2015 (2015-04-30) * abstract * * paragraphs [0027], [0053], [0057]; figures 1-5 * | 1-10 | INV. H02M1/00 G01K7/01 |
| X | US 6 297 761 B1 (BARRENSCHEEN JENS [DE] ET AL) 2 October 2001 (2001-10-02) * abstract * * column 5, lines 4-54; figures 1-3 * * column 6, lines 7-28 * * column 6, lines 52-57 * | 1-10 | |
| X | US 2012/257650 A1 (CHOWDHURY GOLAM R [US]) 11 October 2012 (2012-10-11) * abstract * * paragraphs [0028] - [0032], [0034], [0042]; figures 2-6 * | 1-10 | |
| A | WO 2017/052929 A1 (INTEL CORP [US]) 30 March 2017 (2017-03-30) * abstract; figures 3, 5 * | 1-10 | TECHNICAL FIELDS SEARCHED (IPC) |
| X | US 2010/142587 A1 (KAJITA MIKIHIRO [JP]) 10 June 2010 (2010-06-10) * abstract * * paragraph [0029]; figures 1-6 * | 1-10 | H02M G01K |

The present search report has been drawn up for all claims

| Place of search | Date of completion of the search | Examiner |
|---|---|---|
| The Hague | 24 April 2019 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 7241

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2019

| Patent document cited in search report | | | Publication date | Patent family member(s) | | | Publication date |
|---|---|---|---|---|---|---|---|
| US 2015117494 | A1 | | 30-04-2015 | NONE | | | |
| US 6297761 | B1 | | 02-10-2001 | DE | 19810826 | A1 | 30-09-1999 |
| | | | | US | 6297761 | B1 | 02-10-2001 |
| US 2012257650 | A1 | | 11-10-2012 | US | 2012257650 | A1 | 11-10-2012 |
| | | | | US | 2014016669 | A1 | 16-01-2014 |
| WO 2017052929 | A1 | | 30-03-2017 | CN | 107923800 | A | 17-04-2018 |
| | | | | EP | 3353515 | A1 | 01-08-2018 |
| | | | | TW | 201725369 | A | 16-07-2017 |
| | | | | US | 2017089765 | A1 | 30-03-2017 |
| | | | | US | 2018066999 | A1 | 08-03-2018 |
| | | | | WO | 2017052929 | A1 | 30-03-2017 |
| US 2010142587 | A1 | | 10-06-2010 | JP | 4752904 | B2 | 17-08-2011 |
| | | | | JP | 2010139241 | A | 24-06-2010 |
| | | | | US | 2010142587 | A1 | 10-06-2010 |

EPO FORM P0459

For more details about this annex : see Official Journal of the European Patent Office, No. 12/82